# EUROPEAN PATENT APPLICATION

(11) **EP 1 081 176 A1**
(43) Date of publication of application: **07.03.2001**
(21) Application number: 99202825.8
(22) Date of filing: 31.08.1999
(51) Int. Cl.: C08G 69/44, C09D 177/12, C09D 5/03, C08G 63/685

(54) **Process for the preparation of a condensation polymer**

(71) Applicant: DSM N.V., 6411 TE Heerlen (NL)
(72) Inventor: Grisnich, Willem, 8131 PD Wijhe (NL); Muscat, Dirk, 52538 Gangelt-Bergben (DE); Hendriks, Patrick Herman Marie, 6191 BP Beek (NL); Mak, Hendrika Annette Petronella, 6225 ED Maastricht (NL); Van Benthem, Rudolfus Antonius Theodorus Maria, 6141 BR Sittard (NL)

(57) **Abstract**

The invention relates to a process to prepare a condensation polymer containing ester groups and at least one amide group in the backbone, having at least one β-alkyl-substituted β-hydroxyalkylamide end group, and having a hydroxy alkylamide functionality between 2 and 250 and having a weight average molecular mass of ≥ 800 g/mol. A polyvalent carboxylic acid reacts with an alkanolamine to form a hydroxy-alkylamide after which a polyesteramide is obtained through polycondensation.

The obtained polymers can, for example, be used in thermosetting powder paint compositions.

## Description

The invention relates to a process for the preparation of a condensation polymer containing ester groups and at least one amide group in the backbone, having at least one β-substituted β-hydroxyalkylamide end group, having a hydroxy alkylamide functionality between 2 and 250 and having a weight average molecular mass of ≥ 800 g/mol.

These polymers are disclosed in WO-A-99/16810 which also describes a process for producing these polymers from alkanolamines and cycloanhydrides or activated acids, and their use in the technical field of powder paints. It is a disadvantage of this process that curing of the obtained condensation polymers with an acid functional polyester at a temperature of about 200°C can result in the emission of small amounts (generally less than 1,0 % by weight relative to the binder) of volatile organic compounds for example cyclic carboxylic anhydrides and/or their derivatives.

It is the object of the present invention to provide a process which does not result in the emission of volatile organic compounds derived from cyclic carboxylic anhydride and which also results in the required good powder paint and powder coating properties.

The process according to the invention is characterized in that a polyvalent carboxylic acid reacts with a alkanolamine to form a hydroxyalkylamide after which a polyesteramide is obtained through polycondensation.

The process according to the invention results in a product which has a broader molecular weight distribution, a broader range of melting points and/or glass transition temperatures. The obtained polmers give the required good powder paint and powder coating properties. The process according to the invention does not result in the emission of volatile organic compounds derived from cyclic anhydrides.

Preferably the polyvalent carboxylic acid is a dicarboxylic acid.

Preferably the carboxylic acid applied in the process according to the invention is not capable of forming a cyclic anhydride.

Suitable dicarboxylic acids include for example isophthalic acid, terephthalic acid, cis- and trans hexahydroterepthalic acid, 2,6-naphthalene dicarboxylic acid, 4,4-oxybisbenzoic acid, 3,6-dichlorophthalic acid, tetrachlorophthalic acid,tetrabromophtalic acid, tetrahydrophthalic acid, hexachloroendomethylene tetrahydrophthalic acid, phthalic acid, azelaic acid, sebacic acid, decanedicarboxylic acid, adipic acid, diglycolic acid, succinic acid, fumaric acid, glutaric acid, malonic acid, dodecenyl succinic acid, 1,9 nonaic dicarboxylic acid and maleic acid or their mixtures.

More preferably a mixture containing terephtalic acid, isophtalic acid and/or adipic acid is applied. In this mixture the amount of adipic acid generally ranges between 10 and 90% by weight (relative to the total amount of acids in the polymer composition) and preferably between 15 and 50% by weight.

It is also possible to apply minor amounts, for example, less than 20% by weight of the total amount of acids of tri- or higher functional carboxylic acids in combination with a dialkanolamine. It is also possible to apply, for example, more than 20% by weight of the total amount tri- and higher acids in combination with at least 20% by weight (relative to the total amount of alkanolamines) monoalkanolamine. Suitable tricarboxylic acids include for example trimellitic acid, citric acid and 1,3,5-benzene tricarboxylic acid.

Preferably the alkanolamine is a β-substituted alkanolamine.

Preferably the β-substituted alkanolamine is a β-alkyl-substituted alkanolamine.

Suitable β-alkyl-substituted β-alkanolamines are for example diisopropanolamine, cyclohexyl isopropanolamine, N-(m)ethyl isopropanolamine, diisobutanolamine, di-β-cyclohexanolamine and/or n-butyl isopropanolamine.

Preferably a dialkanolamines is applied.

Most preferable are diisopropanolamine and/or diisobutanolamine are applied.

The equivalent ratio dicarboxylic acid: alkanolamine generally ranges between 1 : 1,3 and 1 : 2.

Preferably, this ratio ranges between 1 : 1,3 and 1 : 1,6.

The process according to the invention is applied at temperatures between 120°C and 200°C. Preferably the temperature is between 140°C and 180°C.

Generally, the pressure is between 0 and 5.10⁵ Pa, preferably between 0 and 10⁵ Pa.

The process can be applied in water and/or an organic solvent.

Preferably, the polymer obtained contains at least two groups according to formula (I) 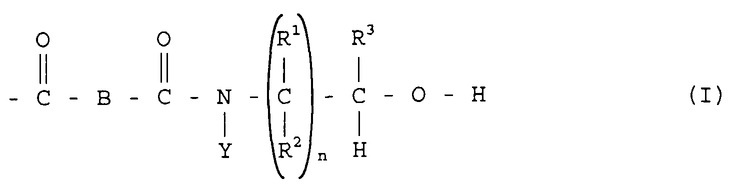 in which 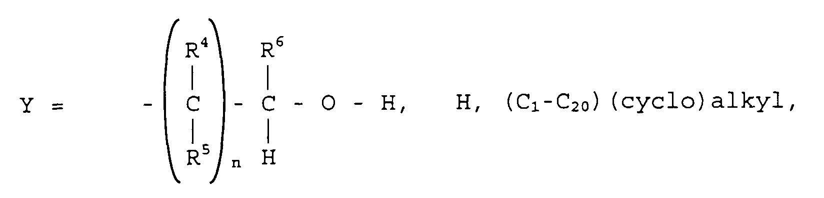 or (C₆-C₁₀) aryl,
B = (C₂-C₂₄), optionally substituted, aryl or (cyclo)alkyl aliphatic diradical,
R¹, R², R³, R⁴, R⁵ and R⁶ may, independently of one another, be the same or different, H, (C₆-C₁₀) aryl or (C₁-C₈) (cyclo)alkyl radical and
n = 1-4.

Preferably n = 1.

According to a preferred embodiment of the invention B = (C₄-C₂₄) aryl or (cyclo)alkyl aliphatic diradical.

More preferably the polymer contains at least two groups according to formula (II): 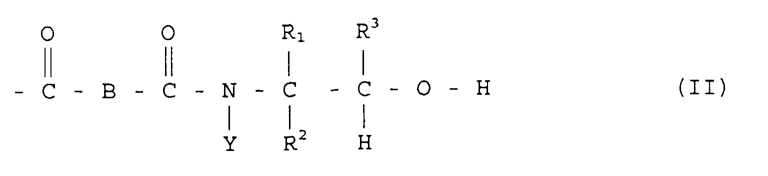 in which 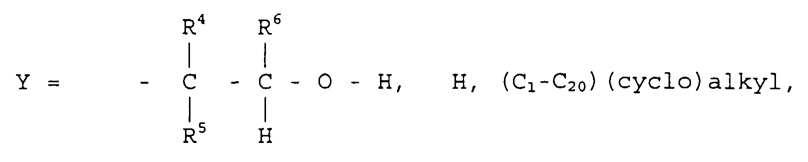 or (C₆-C₁₀) aryl,
B = (C₄-C₂₄), optionally substituted, aryl or (cyclo)alkyl aliphatic diradical, and
R¹, R², R³, R⁴, R⁵ and R⁶ may, independently of one another, be the same or different, H, (C₆-C₁₀) aryl or (C₁-C₈) (cyclo)alkyl radical.

According to a further preferred embodiment, the polymer containing hydroxyalkylamide groups is a polymer according to formula (III): 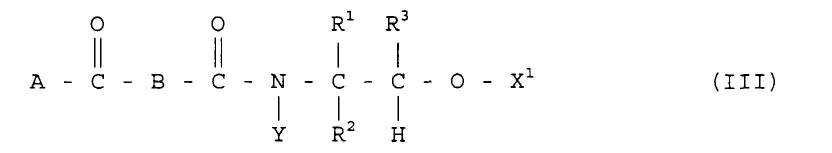 in which: 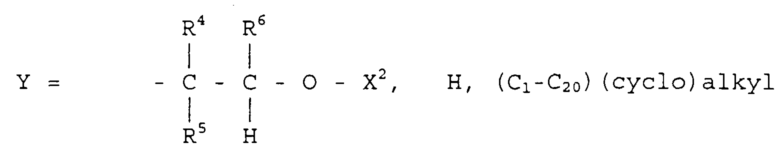 or (C₆-C₁₀)aryl 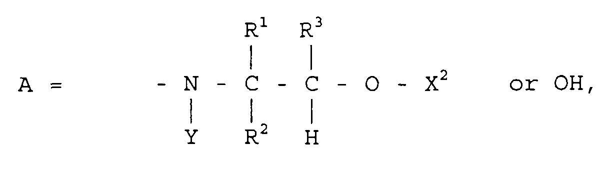
B = (C₂-C₂₄), optionally substituted, aryl or (cyclo)alkyl aliphatic diradical, 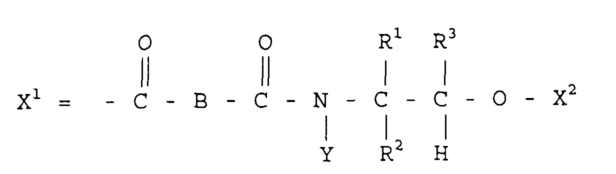
X² = H or X¹ and
R¹, R², R³, R⁴, R⁵ and R⁶ may, independently of one another, be the same or different, H, (C₆-C₁₀) aryl or (C₁-C₈) (cyclo)alkyl radical or CH₂-OX².

In formulas (I), (II) and (III) R groups may together or with neighbouring carbon atoms form part of a cycloalkyl group.

According to another preferred embodiment of the invention, the polymer containing β-hydroxyalkylamide groups is a polymer according to formula (IV): 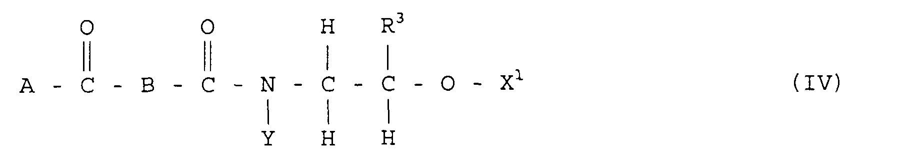 in which: 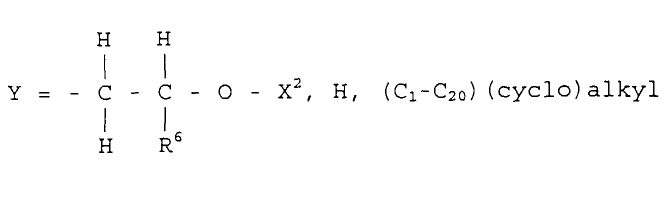 or (C₆-C₁₀)aryl, 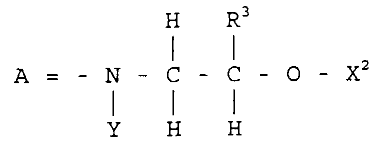 or OH,
B = (C₄-C₂₀), optionally substituted, aryl or (cyclo)alkyl aliphatic diradical, 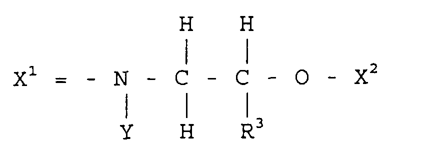
X² = H or X¹,
R³ = (C₆-C₁₀) aryl or (C₁-C₈)alkyl radical and
R⁶ = (C₆-C₁₀) aryl or (C₁-C₈)alkyl radical.

The weight average molecular mass of the polymer obtained with the process according to the invention is generally between 800 and 50,000, and preferably between 1000 g/mol and 25,000 g/mol.

The number average molecular mass of said polymer is generally between 600 and 10,000 and preferably between 700 and 4000.

The β-hydroxyalkylamide functionality of said polymer is generally between 2 and 250 and preferably between 5 and 50.

Functionality is the average number of reactive groups of the specific type per molecule in the polymer composition.

According to another preferred embodiment of the invention the polymer's hydroxyalkylamide functionality of the polymer is ≥ 5 and the polymer containing β-hydroxyalkylamide groups is a polymer represented by formula (V): 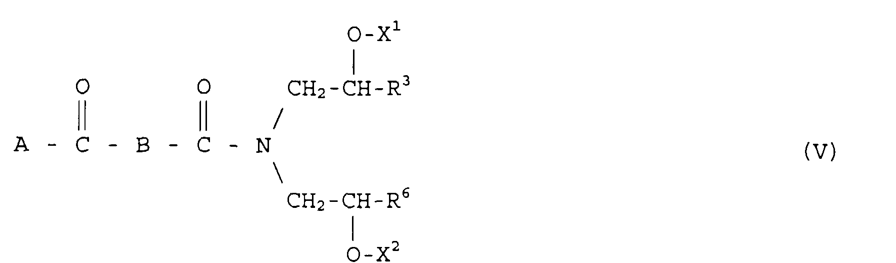 in which: 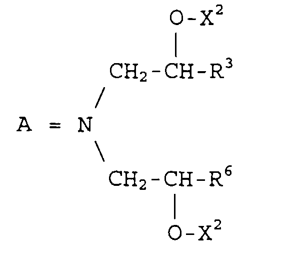 or OH,
B = (C₂-C₁₂), optionally substituted, aryl or (cyclo)alkyl aliphatic diradical, 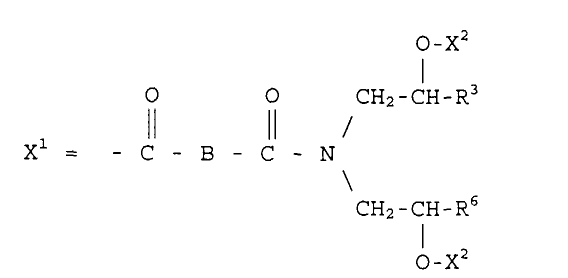
X² = H or X¹,
R³ = H or (C₆-C₁₀) aryl or (C₁-C₈) (cyclo)alkyl radical and
R⁶ = H or (C₆-C₁₀) aryl or (C₁-C₈) (cyclo)alkyl radical

Preferably R³ and R⁶ are (C₁-C₄) alkyl.

According to another preferred embodiment of the invention R³ and R⁶ are methyl or ethyl.

B may be saturated or unsaturated.

B may be substituted with for example a (C₁-C₂₆) alkyl group, which may be saturated or unsaturated; preferably C₁ is used.

B may be for example a (methyl-)1,2-ethylene, (methyl-)1,2-ethylidene, 1,3-propylene, 1,4 butylene, 1,5 pentylene, 1,6 hexylene, 1,8 octylene, 1,10 decylene, cis/trans 1,3-cyclohexylene, cis/trans 1,4 cyclohexylene, oxo-bismethylene, (methyl-)1,2-cyclohexyl, (methyl-)1,2-phenylene, 1,3-phenylene, 1,4-phenylene, 2,3-norbornyl, 2,3-norbornen-5-yl and/or (methyl-)1,2 cyclohex-4-enyl radical.

Depending on the starting monomers chosen, the variables B, R¹, R², R³, R⁴, R⁵ and R⁶ in the molecule or mixture of molecules can be selected to be the same or different per variable.

The polymer composition according to the invention is generally a composition comprising higher and lower oligomers, which usually contains less than 50 wt.%, preferably less than 30 wt.%, of oligomers having a molecular weight smaller than 600.

The monohydroxyalkylamide of a bivalent carboxylic acid generally has the formula (VI): 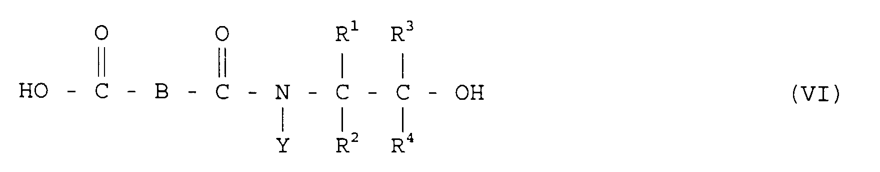 and the bishydroxyalkylamide of a bivalent carboxylic acid generally can be represented by formula (VII): 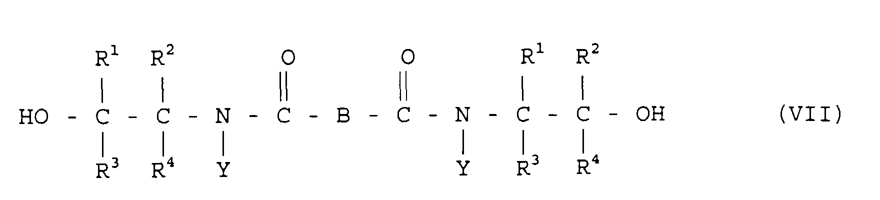 wherein
R¹, R², R³ and R⁴ may, independently of one another, be the same or different, H, (C₆-C₁₀) aryl or (C₁-C₈) (cyclo)alkyl radical.

In a branched polymer obtained with the process according to the invention the (β)-hydroxyalkylamide groups can be present both as an endgroup 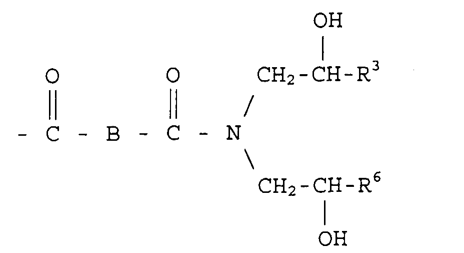 and as a pendant side chain group

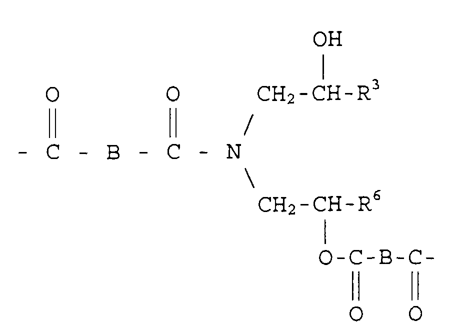

Generally, the molar amount of amide bounds in the chain is higher than the amount of ester bounds.

The polymer according to the invention comprises at least 60% by weight of the products represented by the formulas (III)-(V).

Due to side reactions during the preparation of the polymer it is possible that the composition according to the invention comprises also for example secundary amine groups having the formula (VIII): 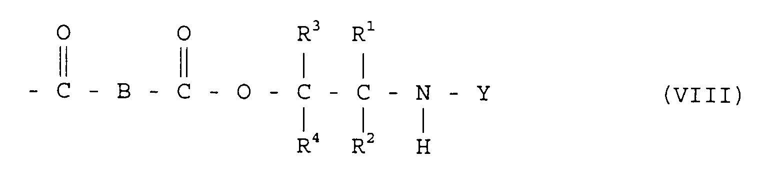 wherein:
R¹, R², R³ and R⁴ may, independently of one another, be the same or different, H, (C₆-C₁₀) aryl or (C₁-C₈) (cyclo)alkyl radical.

In addition to β-hydroxyalkylamide groups, the polymer may also contain carboxyl groups, in amounts of between 0.01 and 2.0 mg equivalent/gram of polymer. The number of carboxylic acids present in the polymer can be controlled via the anhydride/alkanolamine ratio and via the degree of conversion. If an alkanolamine excess is used and the polycondensationreaction is (almost) complete, less than 0.2 mg equivalent acid/gram of polymer is usually present. If carboxyl groups are present, they may in a subsequent step react with compounds containing one or more groups that can react with carboxylic acid, such as for example epoxy groups or β-hydroxyalkylamide groups. The amount of carboxylic acid is preferably as low as possible, for example between 0.01 and 0.2 mg equivalent/gram of polymer.

The degree of branching and the functionality of the polymer are dependent on the starting materials and the molecular weight of the polymer. A molecular weight higher than 2000 and the use of di- and/or trialkanolamines generally lead to highly branched structures with a functionality of ≥ 10.

The present invention also relates to entirely or partly modified polymers. The modification of the polymer can for example take place by the methods as disclosed in WO-A-99/16810 which publication is disclosed herein by means of this reference.

The branched polymer obtained with the process according to the invention can also react (as disclosed in WO-A-99/16810) with a diisocyanate, after which the isocyanate-functional polymer obtained reacts with a compound capable of reacting with isocyanates. As the diisocyanate use is preferably made of a compound containing two or more isocyanate groups with different reactivities. This is preferably an aliphatic diisocyanate with one sterically more accessible isocyanate group bound to a primary carbon atom and one sterically less accessible isocyanate group bound to a tertiary carbon atom.

The modified and the unmodified polymers obtained with the process according to the invention can be very widely used in technically different fields, both in thermosetting and in thermoplastic applications. Examples are powder-paint compositions, coating systems based on water or solvent, can- or coil-coating systems, radiation-curable coating compositions, alkyd resins for coatings, unsaturated resins for construction purposes (for example putties, sealants, castings, compounds and molding compounds), inks, toners, film formers for glass fibre sizings, adhesives, hot melts and in rubber compositions.

Unmodified or partly modified polymers will generally be used in powder-paint systems, in can- or coil-coating systems or in solvent-based coating systems, in airdrying systems, in radiation-curable coatings and construction resins.

Considering the many possibilities of modification of the polymer according to the invention, modification can be directed at any of a wide range of technical applications.

The polymers obtained with the process according to the invention can be used in thermosetting powder-paint compositions.

Thermosetting powder paints have a better resistance to chemicals than thermoplastic powder paints. As a result of this, intensive efforts have for a long time been made to develop crosslinkers and polymers for thermosetting powder coatings. Attempts are still being made to find binder compositions for thermosetting powder paints with a good flow behaviour, good storage stability and a good reactivity. A thermosetting powder-paint binder composition generally contains more than 50 wt.% polymer and less than 50 wt.% crosslinker.

The polymer according to the invention can be used in a powder-paint composition as a polymer and as a crosslinker.

The glass transition temperature (Tg) of the polymer according to the invention lies between 0°C and 150°C, preferably between 50°C and 110°C, depending on the selected starting materials and the molecular weight.

Generally a compound according to any one of formulas (I), (II), (III), (IV) or (V) is used in powder-paint compositions. It is also possible to use a polymer in which up to for example 50 wt.%, preferably less than 30 wt.%, of the hydroxyalkylamide groups are modified.

A coating that ultimately obtained with a powder paint must meet many varying requirements. Various systems are known. Some systems release volatile components during the curing. These systems present the drawback that they form coatings with bubbles and/or that undesirable emissions are released. As far as the latter is concerned, the volatile component, if organic in origin, may cause undesirable environmental or health problems. It has moreover been found that all the desired properties of the powder paint or powder coating are not always realized.

Systems comprising hydroxyalkylamide crosslinkers, such as for example according to EP-A-322834, contain bubbles above a layer thickness limit of about 100 µm as a result of the reaction water released.

In other systems use is made of polyesters and the usual crosslinkers containing an epoxy group. No volatile components are generally released from these systems. However, the use of bisphenol-A-epoxy resins in the so-called hybrid systems results in coatings that exhibit a relatively great extent of yellowing and powdering when exposed to UV light, while the frequently used triglycidylisocyanurate (TGIC) crosslinker is toxicologically suspect.

It has been found that use of the polymer according to the invention as the crosslinker in binder compositions for powder paints results in a combination of highly desirable properties such as for instance good flow behaviour and good resistance to chemicals, desired gloss without bubble formation at the surface up to and including layer thicknesses of at least 120 µm, a high resistance to scratching, good mechanical properties, good powder stability, good weather resistance and good colour stability of the powder coating.

Depending on the final application desired, the crosslinker according to the invention described above can also be used in combination with another crosslinker, such as for example triglycidyl isocyanurate (TGIC), Araldite GT 7004™, polybisphenol-A-epoxides such as, for instance, the various Epikote™ grades, compounds containing (blocked) isocyanate groups, such as for example the caprolactam-blocked isophorone diisocyanate trimer, crosslinkers containing β-hydroxyalkylamide groups such as for example Primid XL 522™ (Rohm and Haas) and/or polyfunctional oxazolines. The weight ratio between the crosslinkers can be selected depending on the final application.

The crosslinker according to the invention is preferably combined with a crosslinker comprising at least one linear or branched aliphatic chain with 5-26 carbon atoms and having an epoxy functionality of more than 1, with the proviso that the epoxy groups are carried on the at least one aliphatic chain. These crosslinkers are described in EP-A-600546 and include, for example, epoxidized oils in which the oil is linseed oil, soybean oil, safflower oil, oiticica oil, carraway seed oil, rapeseed oil, castor oil, dehydrated castor oil, cottonseed oil, wood oil, vernonia oil (a natural oil), sunflower oil, peanut oil, olive oil, soyleaf oil, maize oil, fish oil such as, for instance, herring or sardine oil, and non-cyclic terpene oils.

The epoxidized oil is preferably epoxidized soybean oil and/or epoxidized linseed oil.

As the crosslinker, a powder-paint-binder composition may contain the polymer according to the invention and as the polymer a polymer containing carboxyl groups or containing anhydride groups.

A polyester, a polyacrylate, a polyether (such for example a polyether based on bisphenol or a phenol-aldehyde novolak), a polyurethane, a polycarbonate, a trifluoroethylene copolymer or a pentafluoropropylene copolymer, a polybutadiene, a polystyrene or a styrene maleic anhydride copolymer can for example be chosen as the polymer.

Generally, polymers having an acid value higher than 40 mg KOH/gram resins are applied because a relatively high acid value results in better reactivity with the polymer according to the invention.

The molecular weight (Mn) of this polymer is usually higher than 800, but preferably higher than 1500. The polymer must flow well at temperatures between 100°C and 200°C and therefore has a molecular weight (Mn) that is lower than approximately 10,000, preferably lower than approximately 7000.

This polymer generally has a viscosity at 158°C that is lower than 8000 dPas. The viscosity will usually be higher than 100 dPas. The viscosity can advantageously vary from approximately 300 to approximately 5000 dPas. The viscosity used here was measured according to the Emila method described by Misev in Powder Coatings; Chemistry and Technology, pages 287-288 (1991).

The Tg of this polymer is generally higher than approximately 20°C, preferably higher than 30°C, and may be higher than 40°C. The polymer's Tg is usually lower than 120°C because otherwise the binder composition may become somewhat difficult to prepare. As already indicated above, the choice of the polymer's Tg can be based on the Tg recommended for the binder composition.

If use is made of polymers having only terminal groups that can react with a hydroxyalkylamide functionality, the polymer has an average functionality (capable of reacting with the hydroxyalkylamide groups) of more than 1.6, preferably more than 2. The polymer generally has an average functionality of less than 10, preferably less than approximately 6. If use is made of polymers - such as polyacrylates - with appended functional groups, the average functionality will be higher than approximately 1.6, and preferably higher than 2. Such a polymer generally has an average functionality of less than 8, preferably less than 4.

Most preferable of the suitable polymers are polyesters and polyacrylates.

With the polymers described various properties can be obtained in the binder and in the powder coating itself. Polyacrylates are highly resistant to yellowing and to weather influences.

The polyacrylates can be obtained via known processes. In these processes use can be made of comonomers such as for instance styrene, maleic acid or maleic anhydride and of small amounts of ethylene, propylene and acrylonitrile. Other vinyl or alkyl monomers, such as octene, triallyl isocyanurate and diallyl phthalate, can be added in small amounts.

A polyacrylate containing acid groups is generally obtained through copolymerization of the desired amount of acid, such as for example (meth)acrylic acid, maleic acid or fumaric acid.

The polyacrylate's viscosity usually lies between 100 and 8000 dPas (measured at 158°C; Emila).

The selection of the polymer : crosslinker weight ratio depends on the desired final application and this ratio will generally be between 60:40 and 90:10, preferably between 75:25 and 85:15.

If the polymer according to the invention is used as a resin in powder-paint compositions, compounds containing two or more functional groups that can react with β-hydroxyamide groups can be used as the crosslinker. Examples of such groups are anhydrides, carboxylic acids, carboxylic esters, epoxides, isocyanates and alkoxysilanes. Preferably anhydride groups, carboxylic acids and blocked isocyanates are used. Examples are adipic acid, decanedicarboxylic acid, trimellitic anhydride, phthalic acid or phthalic anhydride, tetrahydrophthalic acid or tetrahydrophthalic anhydride, hexahydrophthalic acid or hexahydrophthalic anhydride and IPDI-trimer or HDI-trimer, optionally blocked with caprolactam or triazole.

The preparation of thermosetting powder coatings in general and the chemical reactions for curing powder paints to form cured coatings are described by Misev in Powder Coatings, Chemistry and Technology (1991, John Wiley) on pp. 42-54, pp. 148 and 224-226. A thermosetting binder composition is generally defined as the resinous part of the powder paint consisting of polymer and crosslinker.

If so desired, the usual additives can be used in the binder composition and in the powder-paint system according to the invention, such as for example pigments, fillers, degassing agents, flow agents and stabilizers. Suitable pigments are for example inorganic pigments, such as for example titanium dioxide, zinc sulphide, iron oxide and chromium oxide, and also organic pigments such as for example azo compounds. Suitable fillers are for example metal oxides, silicates, carbonates and sulphates.

Primary and/or secondary antioxidants, UV stabilizers such as quinones, (sterically hindered) phenolic compounds, phosphonites, phosphites, thioethers and HALS compounds (hindered amine light stabilizers) can for example be used as stabilizers.

Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, such as sterically hindered tertiary amines that are described in EP-B-371528.

Powder paints according to the invention can be applied in the usual manner, for example by electrostatically spraying the powder onto an earthed substrate and curing the coating by exposing it to heat at a suitable temperature for a sufficient length of time. The applied powder can for example be heated in a gas oven, an electric oven or with the aid of infrared radiation.

Thermosetting coatings of powder-paint (coating) compositions intended for industrial applications are described further in a general sense in Powder Coatings, Chemistry and Technology, Misev, pages 141-173 (1991).

Compositions according to the present invention can be used in powder paints for use on, for example, metal, wooden and plastic substrates. Examples are industrial coatings, coatings for machines and tools, household applications and parts of buildings. The coatings are also suitable for use in the automotive industry for coating parts and accessories.

The invention will be elucidated with reference to the following, non-limiting examples.

### Example I

### Preparation of a highly branched polymer comprising units of terephthalic acid and diisopropanolamine

318 g of terephthalic acid, 382 g of diisopropanolamine and 175 g of demi-water were introduced in a double-walled glass reactor, which could be heated by means of thermal oil, fitted with a mechanical stirrer, a distillation head and nitrogen and vacuum connections. The reaction mixture was gradually heated, with stirring, to approx. 70°C and then more slowly to 160°C. Water was distilled-off during the heating. After a total reaction time of 1½ hours vacuum was applied. After 2½ hours of vacuum (< 0.1 bar) the acid value was 41.0 mg KOH/g of resin. The viscosity at 160°C is 40 Pas and the Tg is 73°C. After cooling, the polymer was obtained as a pale yellow glassy mass.

### Example II

### Powder-paint composition

A powder paint composition according to Table 1 was prepared by mixing and extrusion (PRISM extruder, 110°C). The polyester (Uralac P 4040™ from DSM Resins) comprises units of isophthalic acid, terephthalic acid, adipic acid, neopentyl glycol, ethane diol and trimethylol propane. The composition was in the usual manner ground, sieved and electrostatically sprayed (Corona) onto steel test panels. After a cure cycle of 10 minutes at 200°C in a circulation oven, the panels were tested to determine their appearance (visually), flexibility (penetration in mm according to Erichson ISO 1520/DIN 53156), reverse impact resistance (ASTM-2794/69 in inch-pound), adhesion (cross hatch adhesion test) and hardness (König, seconds).

The test results are shown in the table below. This example shows that the polymer according to the invention results in a coating having good mechanical properties and a high blister limit (visually). No VOC derived from cyclic carboxylic anhydrides were detectable with Thermal Desorption Mass Spectrometry from Tenax™ tubes subject to the oven air in which the coatings were cured.

**Table 1**

| Polyester resin: | |
|---|---|
| Uralac P 4040™ | 176 g |
| Crosslinker according to Example I | 24 g |

| Additives: | |
|---|---|
| TiO₂ Kronos 2310 | 100 g |
| Resiflow PV5 | 3.0 g |
| Benzoin | 1.5 g |
| Cure cycle⁵ | 10' 200°C |
| Hardness | 209 s |
| Impact resistance¹ | 130 IP |
| ESP² | > 8 mm |
| Adhesion³ | Gt0 |
| Gel time⁴ | 69 s |
| Flow beheviour | moderate |
| Blister limit | > 140 µm |

| | |
|---|---|
| 1) Reverse impact test; on steel ASTM-2794/69. The impact is usually given in inch.pound (IP). If no cracks are visible in the coating at 160 IP, 160 IP is quoted as the result. An impact resistance of 160 IP stands for 1.84 m.kg. | |
| 2) Erichson Slow Penetration; ISO 1520/DIN 53156. | |
| 3) Cross-hatch adhesion; ISO 2409/DIN 5315 | |
| 4) Gel time; DIN 55990, part B. | |

## Claims

1. A process to prepare a condensation polymer containing ester groups and at least one amide group in the backbone, having at least one β-substituted β-hydroxyalkylamide end group, having a hydroxyalkylamide functionality between 2 and 250 and having a weight average molecular mass of ≥ 800 g/mol., characterized in that a polyvalent carboxylic acid reacts with an alkanolamine to form a hydroxyalkylamide after which a polyesteramide is obtained through polycondensation.

2. Process according to Claim 1 characterized in that the polyvalent carboxylic acid ia a dicarboxylic acid.

3. Process according to Claim 2, characterized in that the dicarboxylic acid is isophthalic acid, terephthalic acid, cis- and trans hexahydroterepthalic acid, 2,6-naphthalene dicarboxylic acid, 4,4-oxybisbenzoic acid, 3,6-dichlorophthalic acid, tetrachlorophthalic acid,tetrabromophtalic acid, tetrahydrophthalic acid, hexachloroendomethylene tetrahydrophthalic acid, phthalic acid, azelaic acid, sebacic acid, decanedicarboxylic acid, adipic acid, diglycolic acid, succinic acid, fumaric acid, glutaric acid, malonic acid, dodecenyl succinic acid, 1,9 nonaic dicarboxylic acid and maleic acid or their mixtures.

4. Process according to any one of Claims 1-3 characterized in that the alkanolamine is a β-substituted alkanolamine.

5. Process according to Claim 4, characterized in that the β-substituted alkanolamine is a β-alkyl-substituted alkanolamine.

6. Process according to Claim 5, characterized in that the alkanolamine is diisopropanolamine, N-(m)ethylisopropanolamine, diisobutanolamine, cyclohexylisopropanolamine, di-β-cyclohexanolamine and/or n-butylisopropanolamine.

7. Process according to any one of Claims 1-6, characterized in that the equivalent ratio dicarboxylic acid: alkanolamine ranges between 1 : 1,3 and 1 : 2.

8. Powder paint binder composition containing a polymer obtained with the process accordign to any one of Claims 1-7.

9. Powder paint composition comprising a binder composition according to Claim 8.

10. Powder coating obtained by curing of a powder paint according to Claim 9.

11. Entirely or partly coated substrate, characterized in that a powder coating according to Claim 10 is used as the coating.
